# EUROPEAN PATENT APPLICATION

(11) **EP 2 261 822 A1**
(43) Date of publication of application: **15.12.2010**
(21) Application number: 10165084.4
(22) Date of filing: 07.06.2010
(51) Int. Cl.: G06F 17/30

(54) **Point search device, point search method and computer program product**

(30) Priority: 09.06.2009 JP 2009137930
(71) Applicant: AISIN AW CO., LTD., Anjo-shi, Aichi 444-1192 (JP)
(72) Inventor: Hanaue, Yusaku, Anjo-shi, Aichi 444-1192 (JP)
(74) Representative: TBK-Patent

(57) **Abstract**

A point search device comprises a unit for inputting a search term, a unit for acquiring an attribute of the inputted search term, a unit for determining whether a first search term that includes a name as the attribute and a second search term that includes a category as the attribute exist, a unit for determining whether a point can be specified by the first search term, if it has been determined that the first search term includes the name and the second search term includes the category as the attribute, a unit for searching for point information that falls under the category corresponding to the second search term in the vicinity of the point specified by the first search term, if it has been determined that the point can be specified by the first search term, and a unit for controlling to display the searched point information.

## Description

The present invention relates to a point search device, a point search method and a program for displaying point information on a list based on inputted search terms.

Conventionally, various technologies that display point information on a list based on inputted search terms are being proposed.

For example, a navigation device narrows down destination data for respective search items (a name, an address, a category of a destination) toward inputted search letters (a search term). The destination data narrowed down among the respective search items is associated with the search term and stored. After that, the destination data, which is included in all of the destination data stored for each search term, is extracted (logical multiplication) and displayed on a list as destination candidates (for example, refer to Japanese Patent Application; Publication No. JP-A-2009-54133, paragraphs 0016 to 0079 and FIGS. 1 to 10).

However, according to the navigation device described in the aforementioned Japanese Patent Application; Publication No. JP-A-2009-54133, paragraphs 0016 to 0079 and FIGS. 1 to 10, if the inputted search term matches a name of a facility, only the destination data including such name is extracted as the destination candidate. In such case, the point information that a user desires may not be displayed on a list. For example, in order to know souvenir shops in the vicinity of the Nagoya castle, if the user has inputted "Nagoya castle" and "souvenir" as the search terms, only "Nagoya castle souvenir shop/ Naka-ward, Nagoya-city", which is operated in a territory of the Nagoya castle, may be extracted as the destination data, and souvenir shops in the vicinity of the Nagoya castle may not be extracted as the destination data.

To solve the aforementioned problems, it is an object of the present invention to provide a point search device, a point search method and a computer program product, in which the point information that the user desires can be surely searched.

To achieve the aforementioned object, a point search device in a first aspect of the present invention includes: an input unit that inputs a search term; an attribute acquisition unit that acquires an attribute of the search term inputted by the input unit; an attribute determination unit that, if a plurality of search terms have been inputted by the input unit, acquires attributes of the search terms through the attribute acquisition unit and determines whether or not a first search term that includes a name as the attribute and a second search term that includes a category as the attribute exist; a point determination unit that, if it has been determined that the first search term that includes the name as the attribute and the second search term that includes the category as the attribute exist, determines whether or not a point can be specified by the first search term; a vicinity search unit that, if it has been determined that the point can be specified by the first search term, searches for point information that falls under the category corresponding to the second search term in the vicinity of the point specified by the first search term; and a display control unit that controls to display the point information searched by the vicinity search unit.

A point search device in a second aspect of the present invention includes: an attribute designation input unit that selects an attribute and inputs a search term; a search term determination unit that determines whether or not a first search term for which a name as the attribute has been selected and a second search term for which a category as the attribute has been selected by the attribute designation input unit have been inputted; a point determination unit that, if it has been determined that the first search term for which the name as the attribute has been selected and the second search term for which the category as the attribute has been selected have been inputted, determines whether or not a point can be specified by the first search term; a vicinity search unit that, if it has been determined that the point can be specified by the first search term, searches for point information that falls under the category corresponding to the second search term in the vicinity of the point specified by the first search term; a display control unit that controls to display the point information searched by the vicinity search unit.

The point search device in a third aspect of the present invention, in the point search device according to the first or second aspect of the present invention, includes a regular search unit that searches for point information through logical multiplication of the point information corresponding to the first search term and the point information corresponding to the second search term, wherein the display control unit controls to display the point information searched by the regular search unit in priority to the point information searched by the vicinity search unit.

According to the point search device in a fourth aspect of the present invention, in the point search device according to any one of the first to third aspects of the present invention, the point determination unit, if there is a facility having a name that matches the first search term, determines that the point can be specified by the first search term.

A point search method in a fifth aspect of the present invention includes the steps of: inputting a plurality of search terms; acquiring attributes of the plurality of search terms inputted at the input step and determining whether or not a first search term that includes a name as the attribute and a second search term that includes a category as the attribute exist; determining, if it has been determined at the attribute determination step that the first search term that includes the name as the attribute and the second search term that includes the category as the attribute exist, whether or not a point can be specified by the first search term; searching for, if it has been determined at the point determination step that the point can be specified by the first search term, point information that falls under the category corresponding to the second search term in the vicinity of the point specified by the first search term; and controlling to display the point information searched at the vicinity search step.

A program in a sixth aspect of the present invention causes the computer to execute the steps of: inputting a plurality of search terms; acquiring attributes of the plurality of search terms inputted at the input step and determining whether or not a first search term that includes a name as the attribute and a second search term that includes a category as the attribute exist; determining, if it has been determined at the attribute determination step that the first search term that includes the name as the attribute and the second search term that includes the category as the attribute exist, whether or not a point can be specified by the first search term; searching for, if it has been determined at the point determination step that the point can be specified by the first search term, point information that falls under the category corresponding to the second search term in the vicinity of the point specified by the first search term; and controlling to display the point information searched at the vicinity search step.

In the point search device in the first aspect of the present invention having the above configuration, the point information that falls under the category corresponding to the second search term is searched in the vicinity of the point specified by the first search term. Therefore, the point information that the user desires can be surely searched and displayed on a list. It enables the user to surely acquire the point information (such as a name of a facility) relating to the category that the user desires in the vicinity of the destination only by inputting the first search term representing the destination and the second search term representing the desired category.

In the point search device in the second aspect of the present invention, if the first search term for which the name as the attribute has been selected and the second search term for which the category as the attribute has been selected have been inputted, the point information that falls under the category corresponding to the second search term is searched in the vicinity of the point specified by the first search term. Therefore, the point information that the user desires can be surely searched and displayed on the list. It enables the user to surely acquire the point information relating to the category that the user desires in the vicinity of the destination only by selecting the name as the attribute and inputting the first search term representing the destination and selecting the category as the attribute and inputting the second search term representing the desired category.

In the point search device in the third aspect of the present invention, the point information searched by the regular search unit is displayed in priority to the point information searched by the vicinity search unit. Therefore, it becomes possible to display the point information that the user desires in the upper part of the list.

In the point search device in the fourth aspect of the present invention, by inputting a name of a facility that the user knows as the first search term, the user can display the point information that falls under the category of the second search term existing in the vicinity of such facility. Therefore, the user can easily acquire the point information that the user desires.

In the point search method in the fifth aspect of the present invention, the point information that falls under the category corresponding to the second search term is searched in the vicinity of the point specified by the first search term. Therefore, the point information that the user desires can be surely searched and displayed on the list. It enables the user to surely acquire the point information (such as the name of the facility) relating to the category that the user desires in the vicinity of the destination only by inputting the first search term representing the destination and the second search term representing the desired category.

In the program in the sixth aspect of the present invention, by causing the computer to read the program, the point information that falls under the category corresponding to the second search term is searched in the vicinity of the point specified by the first search term. Therefore, the point information that the user desires can be surely searched and displayed on the list. It enables the user to surely acquire the point information (such as the name of the facility) relating to the category that the user desires in the vicinity of the destination only by inputting the first search term representing the destination and the second search term representing the desired category.

### BRIEF DESCRIPTION OF THE DRAWINGS

FIG. 1 shows a block diagram showing a navigation device according to an embodiment of the present invention.

FIG. 2 shows an example of a category data file stored in a letter attribute DB.

FIG. 3 shows an example of an attribute data file stored in the letter attribute DB.

FIG. 4 is a flowchart showing "point information display processing" that searches for a destination and a facility belonging to a category that a user desires in the vicinity of the destination based on a plurality of inputted search terms and displays a search result on a list.

FIG. 5 shows an example of a search term input screen to input a search term.

FIG. 6 shows an example of a search result display screen where the search result is displayed on the list.

### DETAILED DESCRIPTION OF THE PREFERRED EMBODIMENT

A point search device, a point search method, and a program according to the present invention realized in a navigation device is described in detail below with reference to an embodiment in conjunction with the accompanying drawings.

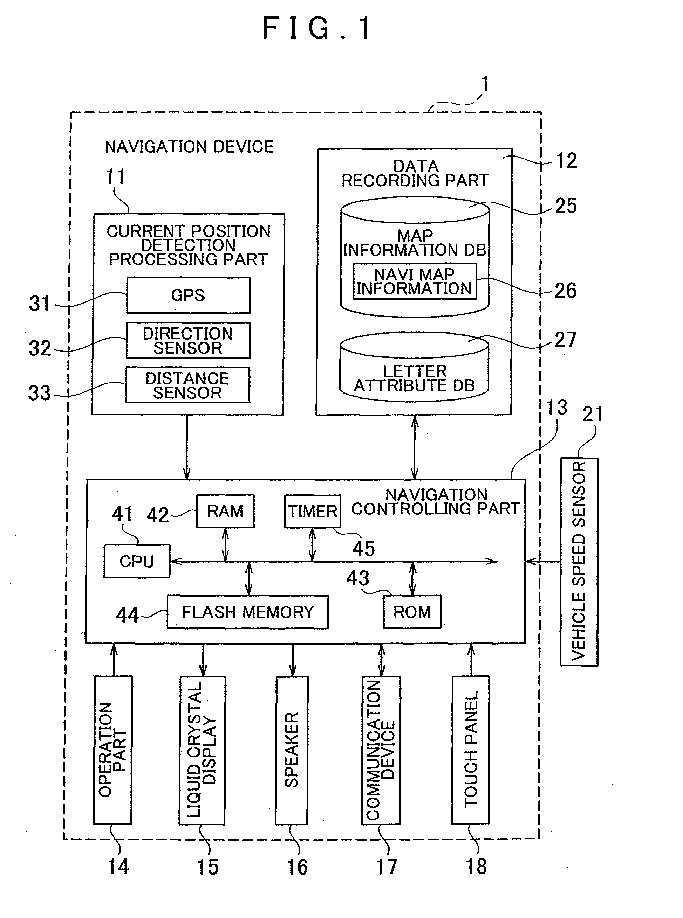

First, a rough structure of a navigation device according to the present embodiment is described with reference to FIG. 1. FIG. 1 is a block diagram showing a navigation device 1 according to the present embodiment.
As shown in FIG. 1, the navigation device 1 according to the present embodiment includes: a current position detection processing part 11 that detects a current position of a vehicle; a data recording part 12 in which various data is recorded; a navigation controlling part 13 that executes various computing processing based on inputted information; an operation part 14 that receives operation from an operator; a liquid crystal display 15 that displays a map and various information to the operator; a speaker 16 that outputs voice guidance relating to route guidance and the like; a communication device 17 that performs communication with a road traffic information center (not shown), a map information delivery center (not shown), and the like through a cellular phone network or the like; and a touch panel 18 installed in front of the liquid crystal display 15. In addition, the navigation controlling part 13 is connected with a vehicle speed sensor 21 that detects a travel speed of the vehicle.

Hereinafter, the respective components composing the navigation device 1 are described. The current position detecting part 11 is formed of a GPS 31, a direction sensor 32, a distance sensor 33, and the like, and can detect a current position and a vehicle direction that represents a direction of the vehicle, a travel distance, and the like.

The data recording part 12 is provided with a hard disk (not shown) serving as an external storage device and a recording medium, and a recording head (not shown) serving as a driver for reading a map information DB 25, a letter attribute DB 27 recorded in the hard disk, and a predetermined program and the like, and writing predetermined data in the hard disk.

In the map information DB 25, navi map information 26 used for travel guidance and route search of the navigation device 1 is recorded. The navi map information 26 is formed of various information required for conducting route guidance and for displaying a map. For example, the navi map information 26 is formed of newly-constructed road information for identifying respective newly-constructed roads, map display data for displaying the map, intersection data regarding respective intersections, node data regarding node points, link data regarding roads (links) that are a kind of facilities, search data for searching for routes, shop data regarding POIs (Point of Interest) such as shops that are a kind of facilities, search data for searching for points, and the like. In addition, for the shop data, data such as names, addresses, telephone numbers, and the like regarding the POIs such as hotels in respective regions, hospitals, gas stations, parking lots, stations, airports, ferry ports, and the like is stored together with IDs to identify the POIs.
In addition, contents of the map information DB 25 is updated by downloading update information delivered from the map information delivery center (not shown) through the communication device 17.

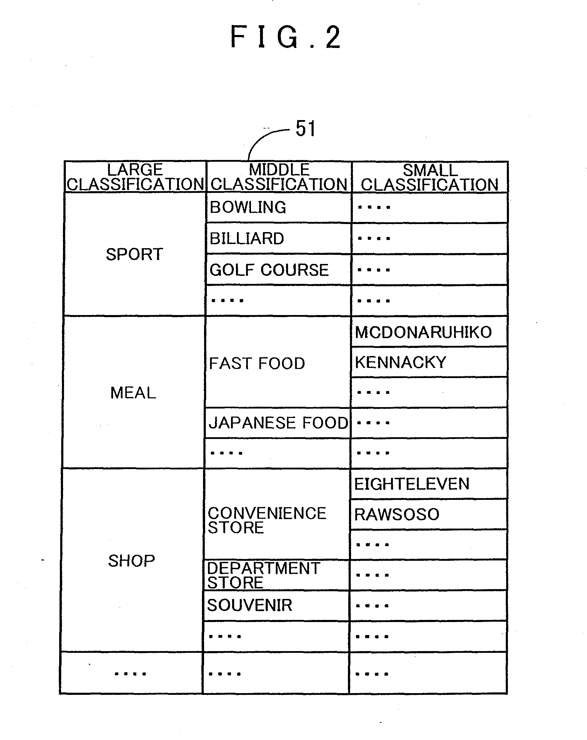

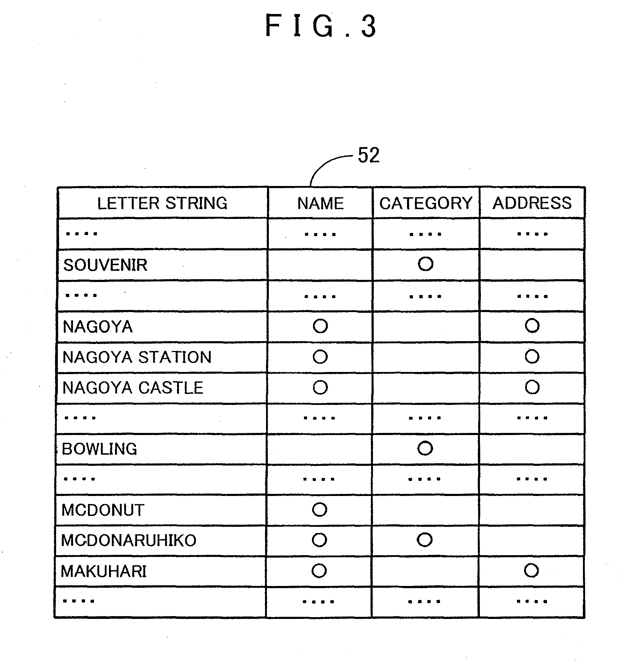

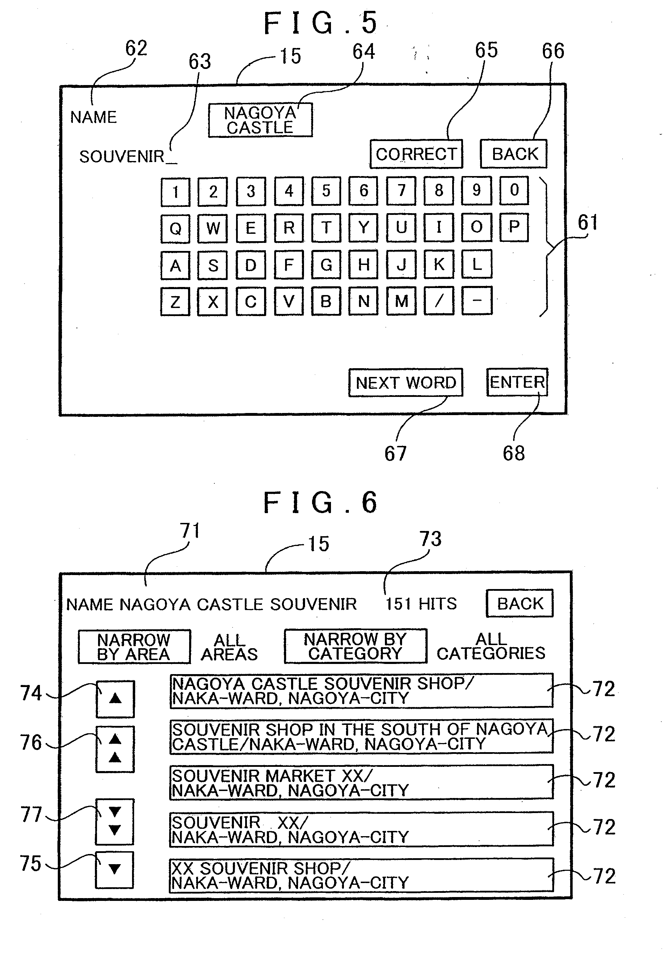

The letter attribute DB 27 stores a category data file 51 (refer to FIG. 2) recording names of the facilities as after-mentioned point information for respective categories that are classified in a hierarchical manner. In addition, the letter attribute DB 27 stores an attribute data file 52 (refer to FIG. 3) recording attributes corresponding to letter strings, that is, search terms, inputted through a letter input key 61 (refer to FIG. 5) displayed on the liquid crystal display 15 as described later. As the attributes, 3 attributes as a "name", a "category", and an "address" are stored (refer to FIG. 3).

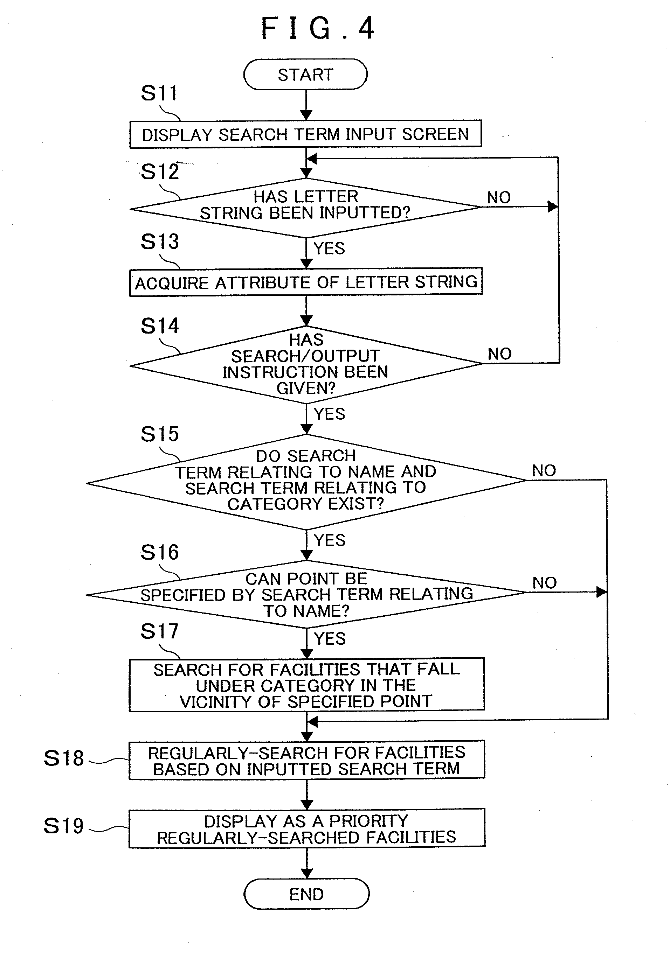

As shown in FIG. 1, the navigation controlling part 13 composing the navigation device 1 is provided with: a CPU 41 serving as a computing device and a control device for performing overall control of the navigation device 1; internal storage devices such as a RAM 42 used as a working memory when the CPU 41 executes various computing processing and in which route data or the like when the route has been searched is stored, a ROM 43 which records a program for control, and a program of point information display processing (refer to FIG. 4) to search for facilities under the category that the user desires in the vicinity of the destination based on a plurality of search terms inputted through the after-mentioned letter input key 61 and display the searched facilities on a list, and a flash memory 44 which records a program read from the ROM 43; a timer 45 for measuring a time; and the like.

Further, the navigation controlling part 13 is electrically connected with the respective peripheral devices (actuators) of the operation part 14, the liquid crystal display 15, the speaker 16, the communication device 17, and the touch panel 18.

The operation part 14 is operated when changing the current position at the time of starting travel and inputting a departure point as a guidance start point and a destination as a guidance end point, or when performing search for information relating to a facility, and is configured with various keys and a plurality of operation switches. The navigation controlling part 13 performs control to execute various operations according to a switch signal outputted by the operation such as pressing of each switch.

On the liquid crystal display 15, map information of currently-traveling area, an after-mentioned search term input screen 62 (refer to FIG. 5), a search result display screen 71 to display names of searched facilities (refer to FIG. 6), operation guidance, a operation menu, key guidance, a recommended route from the current position to the destination, guidance information along the recommended route, traffic information, news, weather forecast, time, E-mail, TV programs, and the like are displayed.

The speaker 16 outputs audio guidance for traveling along the recommended route based on an instruction from the navigation controlling part 13, and the like. For example, the audio guidance as "200m ahead, to the right direction at XX intersection." is provided.

The communication device 17 is a communication unit such as a cellular phone that performs communication with the map information delivery center. The communication device 17 transmits and receives the latest version of the update map information to and from the map information delivery center. In addition, the communication device 17 receives the traffic information including respective information such as congestion information, congestion status of a service area, and the like, each of which is transmitted from the road traffic information center, in addition to the map information delivery center.

The touch panel 18 is a transparent panel-type touch switch provided on the surface of the liquid crystal display 15, and configured such that various kinds of instruction commands can be inputted by pressing a button or the map displayed on a screen of the liquid crystal display 15. The touch panel 18 may be configured with an optical sensor type liquid crystal where the screen of the liquid crystal display 15 is directly pressed.

The category data file 51 recording the names of the facilities as the point information stored in the letter attribute DB 27 for the respective categories that are classified in a hierarchical manner, is described with reference to FIG. 2. FIG. 2 shows an example of the category data file 51 stored in the letter attribute DB 27.

As shown in FIG. 2, the category data file 51 includes a "large classification", a "middle classification", and a "small classification". The "large classification" largely classifies categories and stores categories classified as "sport", "meal", "shop", and the like. The "middle classification" is a classification in a level lower than the "large classification", and stores "boring", "billiard", "golf course", and the like in the lower level of the "sport", and "fast food", "Japanese food", "European food", and the like in the lower level of the "meal". The "small classification" stores names and abbreviations of facilities, keywords representing facilities, and the like, toward the facilities belonging to the respective categories classified as the "middle classification".

Next, the attribute data file 52 recording the attributes corresponding to the letter strings, that is, the search terms that are stored in the letter attribute DB 27 and inputted through the letter input key 61, is described with reference to FIG. 3.
FIG. 3 shows an example of the attribute data file 52 stored in the letter attribute DB 27.

As shown in FIG. 3, the attribute data file 52 includes a "letter string" representing the search term, and the "name", the "category", and the "address" representing attributes. As the "letter string", the names and the abbreviations of the facilities as the point information, the keywords representing the facilities, the letter strings representing the categories, and the like are recorded. The attribute "name" means that the corresponding letter strings are the names or the abbreviations of the facilities as the point information, the keywords representing the facilities, or the like. The attribute "category" means that the corresponding letter strings are recorded any of the "large classification", the "middle classification", and the "small classification" in the category data file 51.

In addition, the attribute "address" means that the corresponding letter strings are area names or facility names that are specified by coordinate points (for example, a latitude and a longitude) on the map stored in the navi map information 26. For the "name", the "category", and the "address" representing the attributes, the attributes corresponding to the respective letter strings are recorded with use of presence or absence of a blank circle or the like. For example, it is recorded that the attributes corresponding to a letter string "Nagoya castle" are the "name" and the "address". The attribute corresponding to a letter string "souvenir" is the "category". The attributes corresponding to a letter string "Mcdonaruhiko" are the "name" and the "category".

### [Point information display processing]

Next, the point information display processing, which is processing executed by the CPU 41 of the navigation device 1 configured as above and searches for the destination and the facilities under the category that the user desires in the vicinity of the destination based on a plurality of search terms inputted through the letter input key 61 and displays a search result on a list, is described with reference to FIGS. 4 to 6.

FIG. 4 is a flowchart showing "point information display processing", which is the processing executed by the CPU 41 and searches for the destination and the facilities under the category that the user desires in the vicinity of the destination based on a plurality of inputted search terms and displays the search result on the list. The program shown with the flowchart in FIG. 4 is executed by the CPU 41 if a destination setting button (not shown) of the operation part 14 has been pressed.

As shown in FIG. 4, at Step (hereinafter, referred to as "S") 11, the CPU 41 displays the search term input screen 62 (refer to FIG. 5) to input a plurality of search terms for searching for the names and the like relating to the facilities as the point information on the screen of the liquid crystal display 15.

Here, an example of the search term input screen 62 is described with reference to FIG. 5. As shown in FIG. 5, in the search term input screen 62, the letter input key 61, an input letter displaying part 63, a search term displaying part 64, a correction button 65, a back button 66, a next word button 67, an enter button 68 are displayed.

In the input letter displaying part 63, input letters inputted through the letter input key 61 are displayed. If the next word button 67 has been pressed, the letter string displayed in the input letter displaying part 63 is displayed as the search term in the search term displaying part 64 and it becomes possible to input a new letter string. In addition, each time the correction button 65 is pressed, the lastly-inputted letter of the letter string displayed in the input letter displaying part 63 can be deleted letter by letter.

In addition, it is possible to set back to the status just before the last operation by pressing the back button 66. Further, it is possible by pressing the enter button 68 to instruct so as to search for the names and the like relating to the facilities as the point information using each letter string displayed in the search term displaying part 64 as the search term and display the search result on the list.

Subsequently, as shown in FIG. 4, at S12, the CPU 41 wait till the search term is inputted (S12: NO). That is, the CPU 41 displays the letter string inputted through the letter input key 61 in the input letter displaying part 63, and also waits till the next word button 67 is pressed.
If the search term has been inputted, that is, if the next word button 67 has been pressed (S12: YES), the CPU 41 goes to processing of S13.

At S13, the CPU 41 displays the letter string, which is displayed in the input letter displaying part 63, as the search term in the search term displaying part 64, and also records the letter string as the search term in the RAM 42. In addition, considering the letter string composing the search term as the "letter string" of the attribute data file 52 stored in the letter attribute DB 27, the CPU 41 reads the attribute according to such "letter string" and records the read attribute as the attribute corresponding to such search term.

For example, if the search term is "Nagoya castle", the CPU 41 reads the "name" and the "address" as the attributes corresponding to the "Nagoya castle" (refer to FIG. 3), and records the "name" and the "address" as the attributes corresponding to the search term "Nagoya castle" in the RAM 42. In addition, if the search term is "souvenir", the CPU 41 reads the "category" as the attribute corresponding to the "souvenir" (refer to FIG. 3), and records the "category" as the attribute corresponding to the search term "souvenir" in the RAM 42.

Subsequently, at S14, the CPU 41 executes determination processing to determine whether or not an instruction has been given so as to search for the names of the facilities and the like based on the search terms displayed in the search term displaying part 64 and display the search result on the list, that is, whether or not the enter button 68 has been pressed.

If the instruction has not been given so as to search for the names of the facilities and the like based on the search terms displayed in the search term displaying part 64 and display the search result on the list, that is, if the enter button 68 has not been pressed but another letter input key 61 or the like has been pressed (S14: NO), the CPU 41 executes the processing at S12 and subsequent steps again.

On the other hand, if the instruction has been given so as to search for the names of the facilities and the like based on the search terms displayed in the search term displaying part 64 and display the search result on the list, that is, if the enter button 68 has been pressed (S14: YES), the CPU 41 goes to the processing at S15. At S 15, the CPU 41 sequentially reads the attributes of the inputted respective search terms and executes determination processing to determine whether or not the search term that includes the "name" as the attribute (a first search term) and the search term that includes the "category" as the attribute (a second search term) exist individually.

If it has been determined that the search term that includes the "name" as the attribute and the search term that includes the "category" as the attribute do not exist individually (S15: NO), the CPU 41 goes to the after-mentioned processing at S18.

On the other hand, if it has been determined that the search term that includes the "name" as the attribute and the search term that includes the "category" as the attribute exist individually (S15: YES), the CPU 41 goes to the processing at S16. For example, if the search term "Nagoya castle" including the attributes "name" and "address" (the first search term) and the search term "souvenir" including the attribute "category" (the second search term) exist (S15: YES), the CPU 41 goes to the processing at S16.

At S16, the CPU 41 executes determination processing to determine whether or not a point can be specified by the letter string of the search term including the attribute "name", that is, whether or not the search term also includes the attribute "address" and a facility having a name that matches the letter string of the search term is recorded in the navi map information 26.

If it has been determined that the point cannot be specified by the letter string of the search term including the attribute "name", that is, if the search term does not include the attribute "address", or if the search term includes the attribute "address" but the facility having the name that matches the letter string of the search term is not recorded in the navi map information 26 (S16: NO), the CPU 41 goes to the after-mentioned processing at S18.

On the other hand, if it has been determined that the point can be specified by the letter string of the search term including the attribute "name", that is, if the search term includes the attribute "address" and the facility having the name that matches the letter string of the search term is recorded in the navi map information 26 (S16: YES), the CPU 41 goes to the processing at S17. For example, the search term "Nagoya castle" includes the attributes "name" and "address" and a facility "Nagoya castle" that matches the letter string "Nagoya castle" is recorded in the navi map information 26 (S16: YES), the CPU 41 goes to the processing at S17.

At S 17, the CPU 41 reads a coordinate point (for example, the latitude and the longitude) on the map recorded in the navi map information 26 for the facility having the name that matches the letter string of the search term, and records a predetermined area outside of such facility (for example, an area within 4-square-km or within a 4-km radius), that is, the vicinity of such facility, as a search area in the RAM 42. For example, the search area is set to the area within 4-square-km of the facility "Nagoya castle".

The CPU 41 reads the search term including the attribute "category" (the second search term) from the RAM 42, and if the second search term belongs to the "small classification" of the category data file 51, sets the letter string of the second search term as the search term. The CPU 41 searches the navi map information 26 for "facility names" that contain or are the same as the search term within the search area, and records the searched "facility names" as the "point information" of vicinity search in the RAM 42.

For example, as shown in FIG. 2, if the search term including the attribute "category" (the second search term) is "eighteleven", the letter string "eighteleven" is set as the search term. The CPU 41 searches the navi map information 26 for the "facility names" that contain or are the same as the letter string "eighteleven" within 4-square-km outside of the facility "Nagoya castle", and records the searched "facility names" as the "point information" of the vicinity search in the RAM 42.

In addition, the CPU 41 reads the search term including the attribute "category" (the second search term) from the RAM 42, and if the second search term belongs to the "large classification" or the "middle classification" of the category data file 51, sets the respective letter strings as the "small classification" that belong to the categories "large classification" or the "middle classification" as the search terms. The CPU 41 searches the navi map information 26 for the "facility names" that contain or are the same as the search terms within the set search area, and records the searched "facility names" as the "point information" of the vicinity search in the RAM 42.

For example, as shown in FIG. 2, if the search term including the attribute "category" (the second search term) is "souvenir", the letter strings as the "small classification" that belong to "souvenir" as the "middle classification" are set as the search terms. The CPU 41 searches the navi map information 26 for the "facility names" that contain or are the same as the search terms within 4-square-km outside of the facility "Nagoya castle", and records the searched "facility names" such as "Souvenir market XX/ Naka-ward, Nagoya-city", "Souvenir XX/Naka-ward, Nagoya-city", "XX souvenir shop/ Naka-ward, Naogya-city" as the "point information" of the vicinity search in the RAM 42.

In addition, as shown in FIG. 2, if the search term including the attribute "category" (the second search term) is "sport", the letter strings as the "small classification" that belong to each of "boring", "billiard", "golf course", and the like as the "middle classification" that belong to "sport" as the "large classification" are set as the search terms. The CPU 41 searches the navi map information 26 for the "facility names" that contain or are the same as such search terms within 4-square-km outside of the facility "Nagoya castle", and records the searched "facility names" as the "point information" of the vicinity search in the RAM 42.

Subsequently, at S 18, the CPU 41 performs regular search for corresponding facilities toward the search terms determined at the aforementioned S14, and records the searched facilities as the point information of the regular search.
Specifically, if the attribute of the search term is the "name", the CPU 41 sets the search condition such that facilities having names that contain the letter string of the search term are searched. In addition, if the attribute of the search term is the "address", the CPU 41 sets the search condition such that the search area is within the area or the facility that contains the letter string of the search term.

If the attribute of the search term is the "category" and the letter string of the search term corresponds to the "small classification" of the category data file 51, the CPU 41 sets the search condition such that facilities that contain or are the same as such letter string are searched. In addition, if the attribute of the search term is the "category" and the letter string of the search term corresponds to the "large classification" or the "middle classification" of the category data file 51, the CPU 41 sets the search condition such that facilities that contain or are the same as the respective letter strings as the "small classification" that belong to the category as such "large classification" or "small classification" are searched.

After executing the logical addition toward facilities searched with the search terms having the same attribute, the CPU 41 executes the logical multiplication toward the respective facilities searched with the search terms having different attributes, and then records the acquired facilities as the "point information" (the name of the facility) of the regular search in the RAM 42. For example, if the letter string "Nagoya castle" including the attributes "name" and "address" and the letter string "souvenir" including the attribute "category" are inputted as the search terms, "Nagoya castle souvenir shop/ Naka-ward, Nagoya-city" and "Souvenir shop in the south of Nagoya castle/ Naka-ward, Nagoya-city" that are the facility names of the facilities, which contain "Nagoya castle" in the names of the facilities and of which the category is "souvenir", are recorded as the "point information" of the regular search in the RAM 42.

Subsequently, at S 19, the CPU 41 reads the "point information" of the regular search searched at the aforementioned S18 and the "point information" of the vicinity search searched at the aforementioned S17 from the RAM 42, sorts the read "point information" so as to display the "point information" of the regular search as a priority on the list. After displaying the list, the CPU 41 terminates the processing. A predetermined number of the facilities such as 5 facilities are displayed at the same time according to the order of the list on the liquid crystal display 15 (refer to FIG. 6). In addition, the "point information" of the regular search and the "point information" of the vicinity search may be separately sorted in the order of the shortest distance from the destination first, and the "point information" of the regular search may be displayed as a priority on the list.

Here, an example of a result list displayed when "Nagoya castle" and "souvenir" are inputted as the search terms and the enter button 68 has been pressed in the search term input screen 62 as shown in FIG. 5, is described with reference to FIG. 6. FIG. 6 shows an example of a search result display screen 71, in which the search result is displayed on the list.

First, the CPU 41 reads "Nagoya castle souvenir shop/ Naka-ward, Nagoya-city" and "Souvenir shop in the south of Nagoya castle/ Naka-ward, Nagoya-city" as the "point information" of the regular search searched at the aforementioned S18 from the RAM 42. In addition, the CPU 41 reads "Souvenir market XX/ Naka-ward, Nagoya-city", "Souvenir XX/ Naka-ward, Nagoya-city", "XX souvenir shop/ Naka-ward, Naogya-city" and the like as the "point information" of the vicinity search searched at the aforementioned S 17 from the RAM 42. Then, the read "point information" is sorted such that the "point information" of the regular search is displayed as a priority.

Subsequently, as shown in FIG. 6, the CPU 41 displays the search result display screen 71 on the liquid crystal display 15, and displays in the order of priority the point information (the name of the facility) of the top 5 of the searched facilities relating to souvenir shops centered on the facility "Nagoya castle" such as "Nagoya castle souvenir shop/ Naka-ward, Nagoya-city", "Souvenir shop in the south of Nagoya castle/ Naka-ward, Nagoya-city", "Souvenir market XX/Naka-ward, Nagoya-city", "Souvenir XX/ Naka-ward, Nagoya-city", and "XX souvenir shop/ Naka-ward, Naogya-city" in 5 search result display columns 72.

Here, if the user presses and selects the point information (the name of the facility) in one of the search result display columns 72, the CPU 41 sets the facility as the destination, performs route search, and displays the recommended route on the map. In addition, the CPU 41 displays facility information (for example, business hours, fees, and the like) relating to the facility.

A hit number display part 73 is provided in the upper part of the search result display screen 71, and the number of searched targets is displayed. On the left side of the search result display columns 72, a previous button 74 and a next button 75 for scrolling up and down the names of the facilities in the search result display columns 72 one by one, and page buttons 76 and 77 for scrolling up and down the names of the facilities in the search result display columns 72 five by five, are displayed.

As described in detail above, in the navigation device 1 according to the present embodiment, if the search term including the "name" as the attribute (the first search term) and the search term including the "category" as the attribute (the second search term) have been inputted, the CPU 41 searches for the point information that falls under the category corresponding to the second search term in the vicinity of the point specified by the first search term. Therefore, the point information that the user desires can be surely searched and displayed on the list. It enables the user to easily acquire the point information (such as the name of the facility) relating to the category that the user desires in the vicinity of the destination only by inputting the first search term representing the destination and the second search term representing the desired category.

In addition, if the search term including the attribute "name" (the first search term) and the search term including the attribute "category" (the second search term) have been inputted, the CPU 41 searches for the facility names that contain the letter string of the first search term in the names of the facilities and fall under the category corresponding to the second search term and displays as a prioritythe search result in the upper part of the list. It enables the user to surely acquire the point information (such as the name of the facility) of the destination relating to the category that the user only by inputting the first search term representing the destination and the second search term representing the desired category.

Note that the present invention is not limited to the abovementioned embodiment, but various modifications and/or variations may be made without departing from the broad spirit and scope of the underlying principles.

For example, in the search term input screen 62, a "name selection button" to select the attribute "name" as the attribute of the search term to be inputted, a "category selection button" to select the attribute "category", an "address selection button" to select the attribute "address" may be provided, and the attribute data file 52 may not be stored in the letter attribute DB 27. The "name selection button", the "category selection button", and the "address selection button" are examples of attribute designation input units.

At the abovementioned S12, the user can designate the attribute of the search term by pressing the "name selection button", the "category selection button", or the "address selection button" before inputting the search term. Then, the user can input the search term belonging to the selected attribute by inputting a letter string through the letter input key 61 and pressing the next word button 67.

At the same time, the CPU 41 can records, together with the inputted search term, the attribute corresponding to the pressed button among the "name selection button", the "category selection button", and the "address selection button" as the attribute corresponding to such search term in the RAM 42.

For example, if the "name selection button" is pressed and the search term "Nagoya castle" is inputted, the CPU 41 records the "name" as the attribute corresponding to the search term "Nagoya castle" in the RAM 42. If the "category selection button" is pressed and the search term "souvenir" is inputted, the CPU 41 may record the "category" as the attribute corresponding to the search term "souvenir" in the RAM 42.

Then, the CPU 41 may execute the processing at S14 and subsequent steps, without executing the processing at the abovementioned S 13.
Consequently, by executing the processing at S14 and the subsequent steps, if the first search term having the attribute "name" and the second search term having the attribute "category " are inputted and a point is specified by the first search term (S16: YES), the CPU 1 can search for the point information that falls under the category corresponding to the second search term in the vicinity of the point specified by the first search term and display the searched point information in the upper part of the list.

It enables the user to easily acquire the point information (such as the name of the facility) relating to the category that the user desires in the vicinity of the destination only by inputting the first search term representing the destination and the second search term representing the desired category.
In addition, the CPU 41 can surely display the point information (such as the name of the facility) of the destination relating to the category that the user desires, by searching for the facility names that contain the letter string of the first search term in the names of the facilities and fall under the category corresponding to the second search term and displaying as a priority the searched facility names on the list (S18 to S 19).

If a search term having a "name" as an attribute (a first search term) and a search term having a "category" as the attribute (a second search term) are inputted, a CPU 41 searches for point information that falls under the category corresponding to the second search term in the vicinity of a point specified by the first search term and records the searched point information as "point information" of vicinity search. In addition, the CPU 41 searches for facility names that contain a letter string of the first search in names of facilities and that fall under the category corresponding to the second search term, and records the searched facility names as the "point information" of a regular search. The CPU 41 displays these "point information" on the list so as to prioritize the point information searched by the regular search over the point information searched by the vicinity search.

A point search device comprises a unit for inputting a search term, a unit for acquiring an attribute of the inputted search term, a unit for determining whether a first search term that includes a name as the attribute and a second search term that includes a category as the attribute exist, a unit for determining whether a point can be specified by the first search term, if it has been determined that the first search term includes the name and the second search term includes the category as the attribute, a unit for searching for point information that falls under the category corresponding to the second search term in the vicinity of the point specified by the first search term, if it has been determined that the point can be specified by the first search term, and a unit for controlling to display the searched point information.

## Claims

1. A point search device comprising:
an input unit **(61)** for inputting a search term;
an attribute acquisition unit for acquiring an attribute **(52)** of the search term inputted by the input unit **(61);**
an attribute determination unit that, if a plurality of search terms have been inputted by the input unit **(61),** is configured to acquire attributes **(52)** of the search terms through the attribute acquisition unit and to determine whether or not a first search term that includes a name as the attribute and a second search term that includes a category **(51)** as the attribute exist;
a point determination unit **(41)** that, if it has been determined that the first search term that includes the name as the attribute **(52)** and the second search term that includes the category **(51)** as the attribute exist, is configured to determine whether or not a point can be specified by the first search term;
a vicinity search unit that, if it has been determined that the point can be specified by the first search term, is configured to search for point information that falls under the category corresponding to the second search term in the vicinity of the point specified by the first search term; and
a display control unit **(15)** for controlling to display the point information searched by the vicinity search unit.

2. A point search device comprising:
an attribute designation input unit **(61)** for selecting an attribute **(52)** and inputting a search term;
a search term determination unit for determining whether or not a first search term for which a name as the attribute **(52)** has been selected, and a second search term for which a category **(51)** as the attribute has been selected by the attribute designation input unit have been inputted;
a point determination unit that, if it has been determined that the first search term for which the name as the attribute **(52)** has been selected and the second search term for which the category **(51)** as the attribute has been selected have been inputted, is configured to determine whether or not a point can be specified by the first search term;
a vicinity search unit that, if it has been determined that the point can be specified by the first search term, is configured to search for point information that falls under the category **(51)** corresponding to the second search term in the vicinity of the point specified by the first search term;
a display control unit **(15)** for controlling to display the point information searched by the vicinity search unit.

3. The point search device according claim 1 or 2, comprising
a regular search unit for searching for point information through logical multiplication of the point information corresponding to the first search term and the point information corresponding to the second search term, wherein
the display control unit **(15)** is configured to control to display the point information searched by the regular search unit in priority to the point information searched by the vicinity search unit.

4. The point search device according to any one of claims 1 to 3, wherein
the point determination unit, if there is a facility having a name that matches the first search term, is configured to determine that the point can be specified by the first search term.

5. A point search method comprising the steps of:
an inputting step (**S11**, **S12**) of inputting a plurality of search terms;
an attribute determination step (**S13**) of acquiring attributes of the plurality of search terms inputted at the input step and determining (**S15**) whether or not a first search term that includes a name as the attribute and a second search term that includes a category as the attribute exist;
a point determination step (**S16**) of determining, if it has been determined at the attribute determination step that the first search term that includes the name as the attribute and the second search term that includes the category as the attribute exist, whether or not a point can be specified by the first search term;
a vicinity search step (**S17**) of searching for, if it has been determined at the point determination step that the point can be specified by the first search term, point information that falls under the category corresponding to the second search term in the vicinity of the point specified by the first search term; and
a step (**S19**) of controlling to display the point information searched at the vicinity search step.

6. A computer program product including a program for a processing device, comprising software code portions for performing the steps according to claim 5 when the program is run on the processing device.

7. The computer program product according to claim 6, wherein the computer program product comprises a computer-readable medium on which the software code portions are stored.

8. The computer program product according to claim 6, wherein the program is directly loadable into an internal memory of the processing device.
